(19) Europäisches Patentamt
European Patent Office
Office européen des brevets

(11) **EP 4 326 599 B1**

(12) **EUROPÄISCHE PATENTSCHRIFT**

(45) Veröffentlichungstag und Bekanntmachung des Hinweises auf die Patenterteilung:
**11.06.2025   Patentblatt 2025/24**

(21) Anmeldenummer: **22707169.3**

(22) Anmeldetag: **22.02.2022**

(51) Internationale Patentklassifikation (IPC):
**B62D 1/28** *(2006.01)*     **B62D 15/02** *(2006.01)*

(52) Gemeinsame Patentklassifikation (CPC):
**B62D 1/286; B62D 15/025**

(86) Internationale Anmeldenummer:
**PCT/EP2022/054457**

(87) Internationale Veröffentlichungsnummer:
**WO 2022/223177 (27.10.2022 Gazette 2022/43)**

(54) **COMPUTERIMPLEMENTIERTES VERFAHREN ZUR DETEKTION EINES LENKRADEINGRIFFSZUSTANDS, COMPUTERPROGRAMMPRODUKT, FAHRASSISTENZSYSTEM SOWIE KRAFTFAHRZEUG**

COMPUTER-IMPLEMENTED METHOD FOR DETECTING A STEERING WHEEL INTERVENTION STATUS, COMPUTER PROGRAM PRODUCT, DRIVER ASSISTANCE SYSTEM AND MOTOR VEHICLE

PROCÉDÉ MIS EN OEUVRE PAR ORDINATEUR POUR DÉTECTER UN ÉTAT D'INTERVENTION SUR UN VOLANT, PRODUIT-PROGRAMME D'ORDINATEUR, SYSTÈME D'AIDE À LA CONDUITE ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **21.04.2021   DE 102021203951**

(43) Veröffentlichungstag der Anmeldung:
**28.02.2024   Patentblatt 2024/09**

(73) Patentinhaber: **Stellantis Auto SAS**
**78300 Poissy (FR)**

(72) Erfinder: **IBRAHIM, Mostafa**
**65428 Rüsselsheim am Main (DE)**

(74) Vertreter: **ESIP**
**Stellantis**
**Service REIP**
**2-10, boulevard de l'Europe**
**78300 Poissy (FR)**

(56) Entgegenhaltungen:
**DE-A1- 102013 113 628     DE-A1- 102016 005 013**

**Beschreibung**

Vorliegend werden ein computerimplementiertes Verfahren zur Detektion eines Lenkradeingriffszustands, ein Computerprogrammprodukt, ein Fahrassistenzsystem sowie ein Kraftfahrzeug beschrieben.

Computerimplementierte Verfahren zur Detektion eines Lenkradeingriffszustands, Computerprogrammprodukte, Fahrassistenzsysteme sowie Kraftfahrzeuge der eingangs genannten Art sind im Stand der Technik bekannt.

Kraftfahrzeuge werden immer häufiger mit autonomen oder teilautonomen Fahrfunktionen ausgerüstet. Des Weiteren weisen Kraftfahrzeuge häufig Fahrassistenzsysteme auf, die verschiedene spezifische Aufgaben haben, beispielsweise Abstandsregeltempomaten, Spurhalteassistenten oder Spurverfolgungssysteme. Bei teilautonomen Fahrfunktionen oder bei Fahrassistenzsystemen muss ein Fahrer des Kraftfahrzeugs stets in der Lage sein, jederzeit die Kontrolle über das Kraftfahrzeug zu übernehmen. Für die entsprechenden Fahrassistenzsysteme ist es daher wichtig, den Status eines Eingriffs des Fahrers in Stellvorrichtungen des Fahrzeugs, beispielsweise Bremse, Gaspedal oder Lenkrad, jederzeit akkurat feststellen zu können.

Bei Lenkungen ist es zum Beispiel bekannt, mithilfe von kapazitativen Sensoren an einem Lenkradkranz eines Lenkrads zu sensieren, ob ein Fahrer wenigstens eine Hand am Lenkrad hält. Zudem ist es bekannt, mithilfe eines Drehmomentsensors Krafteinwirkungen auf die Lenkung zu messen, die von einem Fahrer mittels des Lenkrads ausgeübt werden. Die beiden bekannten Systeme haben jeweils für sich betrachtet verschiedene Nachteile. So ist es einerseits möglich, dass ein Fahrer zwar ein Lenkrad berührt, jedoch keine Kontrolle über das Kraftfahrzeug ausübt. Des Weiteren ist es bekannt, dass kapazitative Sensoren Probleme bei Fahrern mit Handschuhen haben. Kapazitative Sensoren sind zudem relativ teuer. Die Tatsache, dass sich wenigstens eine Hand einem Lenkradkranz befindet, sagt demnach noch nichts darüber aus, ob der Fahrer das Fahrzeug aktuell kontrolliert. Darüber hinaus ist es bekannt, dass Drehmomentsensoren, die eine Lenkkraft ermitteln, gegebenenfalls fehlerhafte Messungen vornehmen oder überlistet werden können, beispielsweise, indem man einseitig ein Gewicht an das Lenkrad hängt.

Aus der DE 10 2009 028 647 A1 ist ein Servolenkungssystem bekannt, das ein Verstärkungsmodul umfasst, das ein geschätztes Fahrerdrehmoment erzeugt, und ein Mischmodul zum Ermitteln eines Mischwerts. Der Mischwert basiert zumindest teilweise auf einer Ableitung des geschätzten Fahrerdrehmoments, und der Mischwert wird auf ein Rückstelldrehmoment eines Lenkrades angewendet.

Die DE 10 2016 005 013 A1 zeigt ein gattungsgemäßes computerimplementiertes Verfahren und beschreibt ein Steer-by-Wire-Lenksystem für Kraftfahrzeuge mit einem Feedback-Aktuator, wobei basierend auf Messwerten des Feedback-Aktuators eine Hands-On/Off-Erkennung bereitgestellt wird.

Ferner beschreibt die DE 10 2013 113 628 A1 eine Hands-On/Off-Erkennung für ein Fahrzeuglenkrad, die auf einer Frequenzanalyse von Lenkwinkeldaten oder Lenkdrehmomentdaten beruht.

Somit stellt sich die Aufgabe, computerimplementierte Verfahren zur Detektion eines Lenkradeingriffszustands, Computerprogrammprodukte, Fahrassistenzsysteme sowie Kraftfahrzeuge der eingangs genannten Art dahingehend zu verbessern, dass eine zuverlässigere Erkennung einer Kontrollübernahme oder -abgabe seitens eines Fahrers vorliegt.

Die Aufgabe wird gelöst durch ein computerimplementiertes Verfahren zur Detektion eines Lenkradeingriffszustands gemäß Anspruch 1, ein Computerprogrammprodukt gemäß dem nebengeordneten Anspruch 9, ein Fahrassistenzsystem gemäß dem nebengeordneten Anspruch 10 sowie ein Kraftfahrzeug gemäß dem nebengeordneten Anspruch 11. Weiterführende Ausgestaltungen und Weiterbildungen sind Gegenstand der abhängigen Ansprüche.

Nachfolgend wird ein computerimplementiertes Verfahren zur Bestimmung eines Lenkradeingriffszustands eines Fahrers eines Kraftfahrzeugs beschrieben, wobei das Kraftfahrzeug wenigstens eine in eine Lenkanordung des Kraftfahrzeugs eingreifende Fahrfunktion aufweist, wobei ein Lenkdrehmoment an der Lenkanordnung erfasst und daraus ein Lenkdrehmomentsignal erzeugt wird, wobei in einem ersten Zweig eine Lenkdrehmomentverschiebung (bzw. ein Lenkdrehmomentoffset) aus dem Lenkdrehmomentsignal ermittelt wird, wobei ein Kalman-Filter verwendet wird, wobei der Kalman-Filter als Messgrößen das Lenkdrehmomentsignal sowie die Lenkdrehmomentverschiebung verwendet, wobei der Kalman-Filter die Lenkdrehmomentverschiebung aus dem Lenkdrehmomentsignal herausfiltert, um einen Lenkdrehmomentschätzwert zu ermitteln, wobei der Lenkdrehmomentschätzwert mit wenigstens einem Grenzwert verglichen wird, wobei durch den Vergleich ermittelt wird, ob der Fahrer in die Lenkanordnung eingreift.

Die Fahrfunktion kann eine Fahrassistenzfunktion, z.B. eine Spurverfolgungs- oder Spurhaltefunktion sein oder eine automatisierte oder teilautomatisierte Funktion, z. B. ein Stauassistent oder eine Einparkfunktion. Das Verfahren kann von dem Kraftfahrzeug auch in mehreren Fahrfunktionen verwendet werden, unter anderem auch in einem Müdigkeitserkennungssystem.

Das Lenkdrehmoment kann beispielsweise mittels eines Kraftsensors bzw. eines Drehmomentsensors erfasst bzw. gemessen werden, der an der Lenkanordnung angeordnet ist. Ein entsprechender Kraftsensor oder Drehmomentsensor kann funktionell zwischen einer Lenksäule und einem Lenkrad der Lenkanordnung des Kraftfahrzeugs angeordnet sein und somit Kräfte oder Momente messen, die über das Lenkrad auf die Lenksäule gegeben werden. Das Lenkdrehmomentsignal kann ein kontinuierliches Signal oder ein mit einer gegebenen Abtastfrequenz abgetastetes Signal sein.

Entsprechende Sensoren sind systemisch bedingt und aufgrund äußerer Einflüsse stets rauschbehaftet, sodass eine Bestimmung eines Lenkradeingriffszustandes über das pure Lenkdrehmomentsignal alleine zu falschen Schlüssen führen kann. Das Rauschen kann beispielsweise aus dem Sensor selbst kommen (z.B. thermisches Rauschen) oder durch äußere Einflüsse, zu denen unter anderem Vibrationen zählen können. Zudem ist es möglich, dass ein entsprechender Sensor Fertigungs- und/oder Messtoleranzen aufweist und unter anderem asymmetrische Signale (rechts-links) abgibt oder eine statische oder quasistatische Verschiebung (Offset) aufweist. Solche Einflüsse können zu Messungenauigkeiten und somit zu falschen Zustandsbestimmungen führen. So könnte eine gewisse Messung zu dem Schluss führen, dass der Fahrer das Lenkrad betätigt, wenn dies tatsächlich gar nicht der Fall ist. Wenn sich dann entsprechende Fahrassistenzfunktionen deaktivieren, könnte dies zu gefährlichen Verkehrssituationen führen.

Eventuell vorhandene Lenkaktuatoren, die zur Umsetzung entsprechender Fahrassistenzfunktion oder automatisierten Fahrfunktion verwendet werden, sind in der Regel an einem Lenkgetriebe angeordnet und wirken in der Regel auf das Lenkgetriebe, sodass bei einem ausschließlichen Eingriff eines entsprechenden Lenkaktuators kein Drehmoment zwischen Lenkrad und Lenksäule zu erwarten ist.

Ein Kalman-Filter ist ein mathematisches Verfahren zur iterativen Schätzung von Parametern zur Beschreibung von Systemzuständen auf der Basis von fehlerbehafteten Beobachtungen. Das Kalman-Filter kann dazu verwendet werden, nicht direkt messbare Systemgrößen zu schätzen, während die Fehler der Messungen optimal reduziert werden. Bei dynamischen Größen kann dem Filter ein mathematisches Modell als Nebenbedingung hinzugefügt werden, um dynamische Beziehungen zwischen den Systemgrößen zu berücksichtigen. So können beispielsweise Bewegungsgleichungen helfen, veränderliche Positionen und Geschwindigkeiten gemeinsam präzise zu schätzen.

Dadurch, dass der Kalman-Filter sowohl ein Lenkdrehmomentsignal als auch eine Lenkdrehmomentverschiebung (Lenkdrehmomentoffset) verwendet, kann ein sauberes Signal in Form eines Lenkdrehmomentschätzwerts generiert werden, das dann mit wenigstens einem Grenzwert verglichen werden kann. Es kann vorgesehen sein, dass es gewisse Drehmomentwertebereiche gibt, die als plausibel für einen Lenkradeingriff angesehen werden, die gewisse sehr geringe Drehmomente nicht unterschreiten und gewisse hohe Drehmomente nicht überschreiten, die ein Fahrer während einer normalen Fahrt nicht aufbringen kann.

Der Kalman-Filter kann zwei Zustände und zwei Messgrößen aufweisen.

Des Weiteren kann zwischen Lenkeingriff und Beenden eines Lenkeingriffs mit unterschiedlichen Grenzwerten oder Wertebereichen unterschieden werden, sodass in verschiedenen Ausgestaltungen ein Grenzwert, zwei Grenzwerte, drei Grenzwerte oder vier Grenzwerte verwendet werden, mit denen der vom Kalman-Filter ausgegebene Lenkdrehmomentschätzwert verglichen wird.

In einer ersten weiterführenden Ausgestaltung kann vorgesehen sein, dass die Lenkdrehmomentverschiebung mittels eines Band-Pass-Filters ermittelt wird.

Mithilfe eines Band-Pass-Filters ist es möglich, gewisse Signalfrequenzbereiche zu isolieren, die typisch für Verschiebungen bzw. Offsets sind. Solche Offsets variieren meist langsam, weswegen ihre Dynamik in der Regel tieffrequent ist.

In einer weiteren weiterführenden Ausgestaltung kann vorgesehen sein, dass der Kalman-Filter ein adaptiver Kalman-Filter mit einer Kovarianzmatrix ist, die adaptiv angepasst wird, um sowohl eine statische Lenkdrehmomentverschiebung als auch eine dynamische Lenkdrehmomentverschiebung zu kompensieren.

Eine Möglichkeit zur Durchführung der Adaption bei adaptiven erweiterten Kalman-Filtern (AEKF) findet sich bei "S. Akhlaghi", "N. Zhou" and "Z. Huang", "Adaptive adjustment of noise covariance in Kalman filter for dynamic state estimation." in IEEE Power and Energy Society General Meeting (PESGM 2017), 16-20 July 2017, Chicago, IL, USA.

Ein adaptiver Kalman-Filter weist den Vorteil auf, dass sein Prozessmodell an bestehende Bedingungen angepasst werden kann, da insbesondere bei Lenkungen nicht erwartet werden kann, dass die Umgebungsbedingungen konstant oder nahezu konstant sind. Lenkungen von Kraftfahrzeugen sind vielen Störungen ausgesetzt, zum Beispiel äußeren Kräften, die sich schnell ändern. Solche Einflüsse können beispielsweise geänderte Reaktionskräfte durch geänderte Fahrbahnuntergründe, Straßenunebenheiten, Seitenwind, Fahrbahnneigungen und dergleichen sein, die während einer Fahrt steten Änderungen unterworfen sind.

In einer weiteren weiterführenden Ausgestaltung kann vorgesehen sein, dass in einem zweiten Zweig eine zeitliche Ableitung des Lenkdrehmomentsignals gebildet wird, um eine Lenkdrehmomentvariation zu ermitteln, wobei die Lenkdrehmomentvariation mit wenigstens einem Grenzwert verglichen wird, wobei durch den Vergleich ermittelt wird, ob der Fahrer in die Lenkanordnung eingreift.

Durch Vorsehen eines zweiten Zweigs, der in einer Ausgestaltung parallel zum ersten Zweig prozessiert werden kann, in dem eine zeitliche Ableitung des Lenkdrehmomentsignals gebildet wird, kann eine plötzliche Zunahme oder Abnahme eines Lenkdrehmoments als Signal dafür verwendet werden, dass ein Fahrer in ein Lenkrad eingreift bzw. dieses loslässt.

In einer weiteren weiterführenden Ausgestaltung kann vorgesehen sein, dass vor und/oder nach der zeitlichen Ableitung des Lenkdrehmomentsignals ein Tiefpassfilter auf das Lenkdrehmomentsignal und/oder die zeitliche Ableitung des Lenkdrehmomentsignals angewendet wird.

Durch Verwendung von Tiefpassfiltern vor und/oder nach der zeitlichen Ableitung ist es möglich, die zeitliche Ableitung des Lenkdrehmomentsignals zu glätten und hochfrequente Einflüsse, die unter anderem durch Vibrationen hervorgerufen werden können zu eliminieren. Solche Vibrationen können unter anderem durch Straße, Motor und/oder Reifen bedingt sein.

In einer weiteren weiterführenden Ausgestaltung kann vorgesehen sein, dass eine Bestimmung eines Eingriffs des Fahrers in die Lenkanordnung aus dem ersten Zweig oder aus dem zweiten Zweig erfolgt.

Durch die beiden Zweige ist es möglich, sowohl Signale aus dem Lenkdrehmoment selbst als auch aus der Veränderung des Lenkdrehmoments zu erhalten und zu verarbeiten.

In einer weiteren weiterführenden Ausgestaltung kann vorgesehen sein, dass der erste Zweig ein erstes Ausgangssignal erzeugt, wobei der zweite Zweig ein zweites Ausgangssignal erzeugt, wobei erstes Ausgangssignal und zweites Ausgangssignal zusammengeführt werden, wobei aus den zusammengeführten Ausgangssignalen ermittelt wird, ob der Fahrer in die Lenkanordnung eingreift.

Durch Zusammenführung der beiden Ausgangssignale ist es möglich, eine robuste Vorhersage über den Eingriff des Fahrers in die Lenkanordnung zu treffen.

In einer weiteren weiterführenden Ausgestaltung kann vorgesehen sein, dass die zusammengeführten Ausgangssignale mittels einer Entprellfunktion entprellt werden, wobei aus den zusammengeführten entprellten Ausgangssignalen ermittelt wird, ob der Fahrer in die Lenkanordnung eingreift.

Mithilfe einer Entprellfunktion ist es möglich, gegebenenfalls bestehende zeitliche Differenzen in den Auswertungen der beiden Zweige sowie andere Ursachen, die zu einem Prellen des resultierenden Signals führen können, zu eliminieren.

Ein erster unabhängiger Gegenstand betrifft eine Vorrichtung zur Bestimmung eines Lenkradeingriffszustands eines Fahrers eines Kraftfahrzeugs beschrieben, wobei das Kraftfahrzeug wenigstens eine in eine Lenkanordung des Kraftfahrzeugs eingreifende Fahrfunktion aufweist, wobei ein Lenkdrehmomentsensor zur Erfassung eines Lenkdrehmoments an der Lenkanordnung und zur Erzeugung eines Lenkdrehmomentsignals daraus angeordnet ist, wobei eine Steuerung vorgesehen ist, die dazu eingerichtet ist, in einem ersten Zweig eine Lenkdrehmomentverschiebung aus dem Lenkdrehmomentsignal zu ermitteln, wobei ein Kalman-Filter vorgesehen ist, wobei der Kalman-Filter als Messgrößen das Lenkdrehmomentsignal sowie die Lenkdrehmomentverschiebung verwendet, wobei der Kalman-Filter dazu eingerichtet ist, die Lenkdrehmomentverschiebung aus dem Lenkdrehmomentsignal herauszufiltern und einen Lenkdrehmomentschätzwert zu ermitteln, wobei die Steuerung dazu eingerichtet ist, den Lenkdrehmomentschätzwert mit wenigstens einem Grenzwert zu vergleichen, wobei durch den Vergleich ermittelt wird, ob der Fahrer in die Lenkanordnung eingreift.

In einer ersten weiterführenden Ausgestaltung ist ein Band-Pass-Filter zur Ermittlung der Lenkdrehmomentverschiebung vorgesehen.

In einer weiteren weiterführenden Ausgestaltung kann vorgesehen sein, dass der Kalman-Filter ein adaptiver Kalman-Filter mit einer Kovarianzmatrix ist, die adaptiv anpassbar ist, um sowohl eine statische Lenkdrehmomentverschiebung als auch eine dynamische Lenkdrehmomentverschiebung zu kompensieren.

In einer weiteren weiterführenden Ausgestaltung kann vorgesehen sein, dass die Steuerung dazu eingerichtet ist, in einem zweiten Zweig eine zeitliche Ableitung des Lenkdrehmomentsignals zu bilden, um eine Lenkdrehmomentvariation zu ermitteln, wobei die Steuerung dazu eingerichtet ist, den Lenkdrehmomentschätzwert mit wenigstens einem Grenzwert zu vergleichen, wobei durch den Vergleich ermittelt wird, ob der Fahrer in die Lenkanordnung eingreift.

In einer weiteren weiterführenden Ausgestaltung kann vorgesehen sein, dass die Steuerung wenigstens ein Tiefpassfilter zur Anwendung auf das Lenkdrehmomentsignal und/oder die zeitliche Ableitung des Lenkdrehmomentsignals aufweist.

In einer weiteren weiterführenden Ausgestaltung kann vorgesehen sein, dass die Steuerung dazu eingerichtet ist, eine Bestimmung eines Eingriffs des Fahrers in die Lenkanordnung aus dem ersten Zweig oder aus dem zweiten Zweig vorzunehmen.

In einer weiteren weiterführenden Ausgestaltung kann vorgesehen sein, dass die Steuerung dazu eingerichtet ist, ein erstes Ausgangssignal aus dem erste Zweig und ein zweites Ausgangssignal aus dem zweiten Zweig zu erzeugen, wobei die Steuerung dazu eingerichtet ist, das erste Ausgangssignal und das zweite Ausgangssignal zusammenzuführen, wobei die Steuerung weiterhin dazu eingerichtet ist, aus den zusammengeführten Ausgangssignalen zu ermitteln, ob der Fahrer in die Lenkanordnung eingreift.

In einer weiteren weiterführenden Ausgestaltung kann vorgesehen sein, dass die Steuerung dazu eingerichtet ist, die zusammengeführten Ausgangssignale mittels einer Entprellfunktion zu entprellen, wobei die Steuerung dazu eingerichtet ist, aus den zusammengeführten entprellten Ausgangssignalen zu ermitteln, ob der Fahrer in die Lenkanordnung eingreift.

Ein weiterer unabhängiger Gegenstand betrifft ein Computerprogrammprodukt, mit einem dauerhaften computerlesbaren Speichermedium, auf dem Befehle eingebettet sind, die, wenn sie von wenigstens einer Recheneinheit ausgeführt werden, bewirken, dass die wenigstens Recheneinheit dazu eingerichtet ist, das Verfahren der vorgenannten Art auszuführen.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Ein weiterer unabhängiger Gegenstand betrifft ein Fahrassistenzsystem eines Kraftfahrzeugs, mit einem Aktuator (Drehmomentgenerator), einem Lenkdrehmomentsensor und einer Steuerung, wobei die Steuerung einen Prozessor und ein Computerprogrammprodukt der zuvor beschriebenen Art aufweist.

Ein weiterer unabhängiger Gegenstand betrifft ein Kraftfahrzeug mit einem Computerprogrammprodukt der zuvor beschriebenen Art und/oder einem Fahrassistenzsystem der zuvor beschriebenen Art.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen. Dabei zeigen schematisch:

Fig. 1   eine Draufsicht auf ein Kraftfahrzeug mit einem Fahrassistenzsystem, sowie

Fig. 2   ein Ablaufdiagramm des Verfahrens.

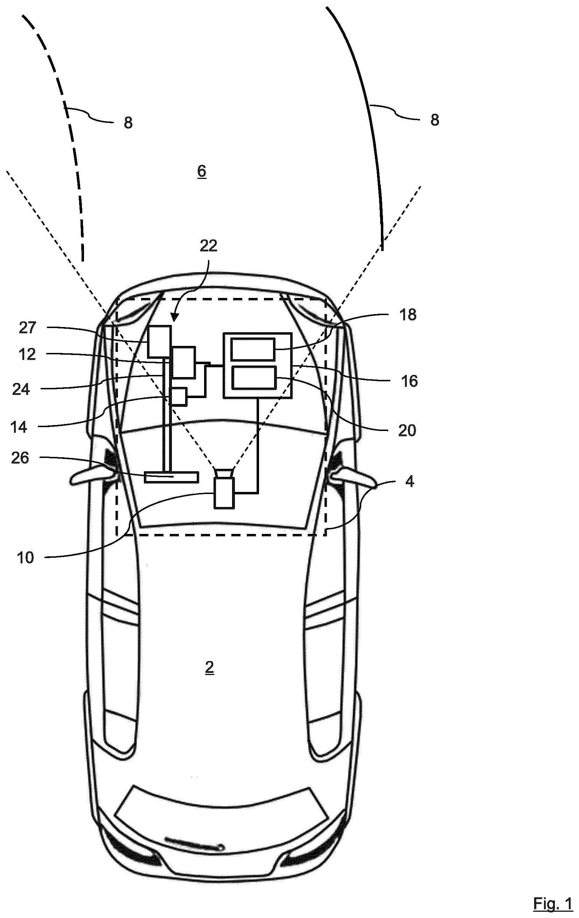

Fig. 1 zeigt eine Draufsicht auf ein Kraftfahrzeug 2 mit einem Fahrassistenzsystem 4 (gestrichelt umrahmt).

Das Kraftfahrzeug 2 befindet sich auf einer Fahrspur 6, die mit Fahrspurmarkierungen 8 gekennzeichnet ist.

Das Fahrassistenzsytem 4 des Kraftfahrzeugs 2 ist ein Spurverfolgungssystem, das dazu dient, das Kraftfahrzeug 2 in der Fahrspur 6 zu halten. Das Fahrassistenzsystem 4 ist dazu mit einer Kamera 10, einem Lenkaktuator 12 und einem Lenkdrehmomentsensor 14 ausgerüstet.

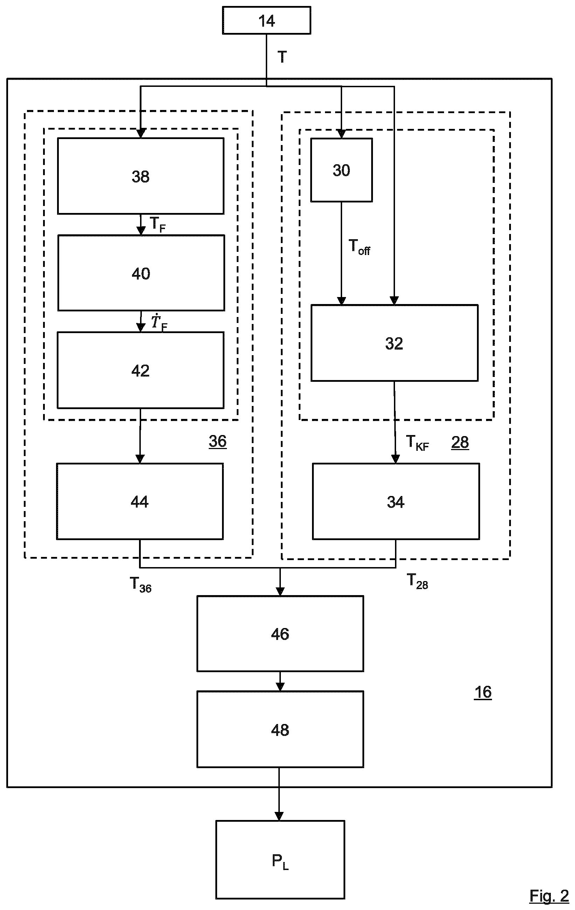

Die Steuerung 16 weist einen Prozessor 18 sowie einen nichtflüchtigen Speicher 20 auf, wobei in dem Speicher 20 ein Computerprogrammprodukt darstellt, das, wenn es von dem Prozessor 18 geladen und ausgeführt wird, dass nachfolgend beschriebene Verfahren (siehe Fig. 2) durchgeführt.

Das Fahrassistenzsystem 4 verwendet Daten der Kamera 10 zur Vorhersage notwendiger Eingriffe in die Aggregate des Kraftfahrzeugs 2. Vorliegend wird vor allem auf Eingriffe in eine Lenkanordnung 22 abgestellt, die neben dem Lenkaktuator 12 unter anderem eine Lenksäule 24 und ein Lenkrad 26 aufweist. Der Lenkdrehmomentsensor 14 misst ein Drehmoment an der Lenksäule 24.

Der Lenkaktuator 12 wirkt auf ein Lenkgetriebe 27, in dem die Lenksäule 24 mündet und über das Lenkkräfte an Räder einer Vorderachse des Kraftfahrzeugs 2 verteilt werden.

Das Fahrassistenzsystem 4 muss stets einen Lenkeingriffszustand der Lenkanordnung 22 ermitteln. Dazu gehört einerseits zu ermitteln, ob die Fahrfunktion ohne Eingriff des Fahrers agieren kann und andererseits, ob der Fahrer das Lenkrad 26 gerade betätigt oder nicht. Zur ersten Analyse gehört eine Analyse der Verkehrssituation und des Fahrzustands des Kraftfahrzeugs 2. Aufgrund dessen muss das Fahrassistenzsystem 4 entscheiden, ob der Fahrer die Kontrolle über das Kraftfahrzeug 2 übernehmen muss oder nicht. Entsprechende Verkehrssituation können beispielsweise die Sicht, Straßenbreite, Straßentyp, Straßenkrümmung, Baustellen, und Gefahrensituationen umfassen, zum Beispiel durch in der Nähe befindliche Kraftfahrzeuge. Zudem muss das Fahrassistenzsystem 4 in der Lage sein, einen Fahrerwillen erkennen können, zum Beispiel einen Spurwechselwillen, ein Abbiege- oder Ausweichmanöver oder eine Positionskorrektur des Kraftfahrzeugs 2 in der Fahrspur.

Fig. 2 zeigt ein Ablaufdiagramm des Verfahrens.

Aus dem Lenkdrehmomentsensor 14 wird ein Lenkdrehmoment T ausgegeben, das von der Steuerung 16 verarbeitet wird. In einem ersten Zweig 28 wird mithilfe eines Bandpassfilters 30 eine Lenkdrehmomentverschiebung $T_{off}$ ermittelt. Die Lenkdrehmomentverschiebung $T_{off}$ sowie das Lenkdrehmoment T werden einem adaptiven Kalman-Filter 32 zugeführt.

Der adaptive Kalman-Filter 32 weist ein Prozessmodell und ein Messmodel auf, bei dem mehrere Annahmen getroffen werden:

1. Prozessmodell: Die Annahmen für das Prozessmodell des adaptiven Kalman-Filters 32 sind:

Ein vom Fahrer eingebrachtes Lenkdrehmoment T und eine Lenkdrehmomentverschiebung $T_{off}$ sind zwischen zwei aufeinanderfolgenden Iterationen k, k+1 des Verfahrens nahezu konstant und Änderungen des Lenkdrehmoments T und der Lenkdrehmomentverschiebung $T_{off}$ werden durch unkorreliertes weißes Rauschen $w_T$ und $w_{off}$ repräsentiert:

Gleichung 1:

$$T_{k+1} = T_k + w_T$$

Gleichung 2:

$$T_{off,k+1} = T_{off,k} + w_{T,off}$$

2. Messmodell: Die Annahmen für das Messmodell des adaptiven Kalman-Filters 32 sind:

Eine geschätzte Messgröße des Lenkdrehmoments $\hat{T}_{k+1}$ ergibt sich aus einem Lenkdrehmoment $T$ abzüglich der Lenkdrehmomentverschiebung $T_{off}$ zuzüglich eines Messrauschens $v_T$, eine geschätzte Messgröße der Lenkdrehhmoment $\hat{T}_{off,k+1}$ ergibt sich aus der Lenkdrehmomentverschiebung $T_{off}$ zuzüglich eines Messrauschens $v_{off}$.

Gleichung 3:

$$\hat{T}_{k+1} = T_{k+1} - T_{off,k+1} + v_T$$

Gleichung 4:

$$\hat{T}_{off,k+1} = T_{off,k+1} + v_{off,}$$

Der Filterprozess des adaptiven Kalman-Filters 32 kann in zwei Schritte aufgeteilt werden; Vorhersage und Abschätzung/Korrektur. Während des Vorhersageschrittes wird a priori ein Schätzwert für die Systemzustände $\hat{T}$, $\hat{T}_{off}$ berechnet. Während des Abschätz-/Korrekturschrittes werden diese mit den gemessenen Werten T, $T_{off}$ verglichen und entsprechend korrigiert.

Eine Korrektur der Lenkdrehmomentverschiebung soll während des Abschätz-/Korrekturschrittes nur dann erfolgen, wenn der Betrag der gemessenen Lenkdrehmomentverschiebung (also das Ausgangssignal aus dem Band-Pass-Filter) kleiner ist als eine bestimmte Obergrenze, die z.B. zwischen 0,1 und 0,3 Nm liegen kann.

Der adaptive Kalman-Filter 32 weist eine Kovarianzmatrix zur Beschreibung des der Rauschterme auf, die adaptiv an dynamische Verschiebungen, z.B. bedingt durch Straßenzustandsveränderungen, Motorvibrationen und dergleichen, angepasst wird.

Eine Möglichkeit zur Durchführung der Adaption der Kovarianzmatrix $Q_k$ bei adaptiven erweiterten Kalman-Filtern (AEKF) findet sich bei "S. Akhlaghi", "N. Zhou" and "Z. Huang", "Adaptive adjustment of noise covariance in Kalman filter for dynamic state estimation." in IEEE Power and Energy Society General Meeting (PESGM 2017), 16-20 July 2017, Chicago, IL, USA:

$$Q_{k+1} = \alpha\, Q_k + (1-\alpha)(K_{k+1}d_{k+1}d^T{}_{k+1}K^T{}_{k+1})$$

mit:

$Q_k$: Kovarianzmatrix
$\alpha$: Vergessensfaktor (liegt zwischen 0 und 1)
$d_k$: verbleibender Fehler (die Differenz zwischen der tatsächlichen Messung und der geschätzten Messgröße)
$K_k$: Kalman gain Faktor

Vorliegend wird kein adaptiver erweiterter Kalman-Filter verwendet, sondern ein adaptiver Kalman-Filter. Eine Beschleunigung der Adaption wird erreicht, wenn man zur Adaption folgende Vorschriften zur Anpassung der Kovarianzmatrix $Q_k$ verwendet:

Gleichung 5:

$$Q_{k+1} = \alpha\, Q_k + (1-\alpha)[(K_{k+1}d_{k+1}d^T{}_{k+1}K^T{}_{k+1}) + (K_{k+1}L_{k+1}L^T{}_{k+1}K^T{}_{k+1})]$$

Gleichung 6:

$$L_{k+1} = K_I(T_s d_{k+1} + d_k)$$

mit:

$K_i$: Integrierender Faktor

$T_s$: Samplezeit

Das Ergebnis des Filterprozesses des adaptiven Kalman-Filters 32 ist ein gefiltertes Lenkdrehmoment $T_{KF}$, das dann in einer Vergleichsinstanz 34 mit Schwellwerten verglichen wird, woraus sich eine Aussage über einen Fahrereingriffe in das Lenkrad 26 ermitteln lässt.

In einem zweiten Zweig 36 wird das Lenkdrehmoment T mithilfe eines Tiefpassfilters 38 gefiltert, danach abgeleitet und danach nochmals mittels eines Tiefpassfilter 42 gefiltert, um sowohl hochfrequente Störungen im Lenkdrehmoment T sowie in der zeitlichen Ableitung des Lenkdrehmoments $\dot{T}_F$ zu eliminieren.

Die gefilterte zeitliche Ableitung $\dot{T}_F$ des Lenkdrehmoments wird einer Vergleichsinstanz 44 zugeführt, die hieraus ermittelt, ob ein Lenkeingriff seitens des Fahrers vorliegt oder nicht.

Die Vergleichsinstanzen 34 des ersten Zweigs 28 und 44 des zweiten Zweigs 36 erzeugen jeweils ein Ausgangssignal, der erste Zweig 28 ein Ausgangssignal $T_{28}$ und der zweite Zweig 36 ein Ausgangssignal $T_{36}$. Die Ausgangssignale $T_{28}$, $T_{36}$ werden einer Entprellfunktion 46 zugeführt, die daraus mithilfe einer Vergleichsinstanz 48 den Zustand des Lenkeingriff durch einen Fahrer konsolidiert und einen Lenkeingriffszustand Parameter $P_L$ ausgibt.

Obwohl der Gegenstand im Detail durch Ausführungsbeispiele näher illustriert und erläutert wurde, so ist die Erfindung nicht durch die offenbaren Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbaren Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterung in der Beschreibung, definiert wird.

Bezugszeichenliste

| | |
|---|---|
| 2 | Kraftfahrzeug |
| 4 | Fahrassistenzsystem |
| 6 | Fahrspur |
| 8 | Fahrspurmarkierung |
| 10 | Kamera |
| 12 | Lenkaktuator |
| 14 | Lenkdrehmomentsensor |
| 16 | Steuerung |
| 18 | Prozessor |
| 20 | nichtflüchtiger Speicher |
| 22 | Lenkanordnung |
| 24 | Lenksäule |
| 26 | Lenkrad |
| 27 | Lenkgetriebe |
| 28 | erster Zweig |
| 30 | Band-Pass-Filter |
| 32 | adaptiver Kalman-Filter |
| 34 | Vergleichsinstanz |
| 36 | zweiter Zweig |
| 38 | Tiefpassfilter |
| 40 | Ableitungsfunktion |
| 42 | Tiefpassfilter |
| 44 | Vergleichsinstanz |
| 46 | Entprellfunktion |
| 48 | Vergleichsinstanz |
| T | Lenkdrehmoment |

| | |
|---|---|
| $T_F$ | tiefpassgefiltertes Lenkdrehmoment |
| $T_{KF}$ | gefiltertes Lenkdrehmoment |
| $T_{off}$ | Lenkdrehmomentverschiebung |
| $T_{28}$, $T_{36}$ | Ausgangssignal |
| $\dot{T}_F$ | gefilterte zeitliche Ableitung des Lenkdrehmoments |
| $P_L$ | Lenkeingriffszustand |

**Patentansprüche**

1. Computerimplementiertes Verfahren zur Bestimmung eines Lenkradeingriffszustands eines Fahrers eines Kraftfahrzeugs (2), wobei das Kraftfahrzeug (2) wenigstens eine in eine Lenkanordnung (22) des Kraftfahrzeugs (2) eingreifende Fahrfunktion aufweist, wobei ein Lenkdrehmoment an der Lenkanordnung (22) erfasst und daraus ein Lenkdrehmomentsignal (T) erzeugt wird, wobei in einem ersten Zweig (28) eine Lenkdrehmomentverschiebung ($T_{off}$) aus dem Lenkdrehmomentsignal (T) ermittelt wird, wobei ein Kalman-Filter (32) verwendet wird, wobei der Kalman-Filter (32) als Messgrößen das Lenkdrehmomentsignal (T) sowie die Lenkdrehmomentverschiebung ($T_{off}$) verwendet, **dadurch gekennzeichnet, dass** der Kalman-Filter (32) die Lenkdrehmomentverschiebung ($T_{off}$) aus dem Lenkdrehmomentsignal (T) herausfiltert, um einen Lenkdrehmomentschätzwert ($T_{KF}$) zu ermitteln, wobei der Lenkdrehmomentschätzwert ($T_{KF}$) mit wenigstens einem Grenzwert verglichen wird, wobei durch den Vergleich ermittelt wird, ob der Fahrer in die Lenkanordnung (22) eingreift.

2. Computerimplementiertes Verfahren nach Anspruch 1, wobei die Lenkdrehmomentverschiebung mittels eines Band-Pass-Filters (30) ermittelt wird.

3. Computerimplementiertes Verfahren nach Anspruch 1 oder 2, wobei der Kalman-Filter ein adaptiver Kalman-Filter (32) mit einer Kovarianzmatrix ist, die adaptiv angepasst wird, um sowohl eine statische Lenkdrehmomentverschiebung als auch eine dynamische Lenkdrehmomentverschiebung zu kompensieren.

4. Computerimplementiertes Verfahren nach einem der vorangegangenen Ansprüche, wobei in einem zweiten Zweig (36) eine zeitliche Ableitung des Lenkdrehmomentsignals (T) gebildet wird, um eine Lenkdrehmomentvariation ($\dot{T}_F$) zu ermitteln, wobei die Lenkdrehmomentvariation ($\dot{T}_F$) mit wenigstens einem Grenzwert verglichen wird, wobei durch den Vergleich ermittelt wird, ob der Fahrer in die Lenkanordnung (22) eingreift.

5. Computerimplementiertes Verfahren nach Anspruch 4, wobei vor und/oder nach der zeitlichen Ableitung des Lenkdrehmomentsignals (T) ein Tiefpassfilter (38, 42) auf das Lenkdrehmomentsignal (T) und/oder die zeitliche Ableitung ($\dot{T}_F$) des Lenkdrehmomentsignals (T) angewendet wird.

6. Computerimplementiertes Verfahren nach Anspruch 5, wobei eine Bestimmung eines Eingriffs des Fahrers in die Lenkanordnung (22) aus dem ersten Zweig (28) oder aus dem zweiten Zweig (36) erfolgt.

7. Computerimplementiertes Verfahren nach einem der vorangegangenen Ansprüche 4 bis 6, wobei der erste Zweig (28) ein erstes Ausgangssignal ($T_{28}$) erzeugt, wobei der zweite Zweig (36) ein zweites Ausgangssignal ($T_{36}$) erzeugt, wobei erstes Ausgangssignal ($T_{28}$) und zweites Ausgangssignal ($T_{36}$) zusammengeführt werden, wobei aus den zusammengeführten Ausgangssignalen ($T_{28}$, $T_{36}$) ermittelt wird, ob der Fahrer in die Lenkanordnung (22) eingreift.

8. Computerimplementiertes Verfahren nach Anspruch 7, wobei die zusammengeführten Ausgangssignale ($T_{28}$, $T_{36}$) mittels einer Entprellfunktion (46) entprellt werden, wobei aus den zusammengeführten entprellten Ausgangssignalen ($T_{28}$, $T_{36}$) ermittelt wird, ob der Fahrer in die Lenkanordnung (22) eingreift.

9. Computerprogrammprodukt mit einem computerlesbaren, nicht-flüchtigen Speichermedium (20), auf dem Befehle eingebettet sind, die, wenn sie von wenigstens einer Recheneinheit (18) ausgeführt werden, bewirken, dass die wenigstens eine Recheneinheit (18) dazu eingerichtet ist, das Verfahren nach einem der vorangegangenen Ansprüche auszuführen.

10. Fahrassistenzsystem eines Kraftfahrzeugs, mit einem Aktuator (12), einem Lenkdrehmomentsensor (14) und einer Steuerung (16), wobei die Steuerung (16) einen Prozessor (18) und ein Computerprogrammprodukt nach Anspruch 9 aufweist.

11. Kraftfahrzeug mit einem Computerprogrammprodukt nach Anspruch 9 und/oder einem Fahrassistenzsystem (4) nach Anspruch 10.

## Claims

1. Computer-implemented method for determining a steering wheel engagement state of a driver of a motor vehicle (2), wherein the motor vehicle (2) at least one in a steering arrangement (22) of the motor vehicle (2) engaging driving function, wherein a steering torque at the steering arrangement (22) detected and a steering torque signal (t) is generated therefrom, wherein in a first branch (28) a steering torque shift (toff) from the steering torque signal (t) is determined, wherein a kalman - filter (32) is used, wherein the kalman - filter (32) as measured variables the steering torque signal (t) as well as the steering torque shift (toff), wherein the kalman - filter (32) the steering torque shift (t) from the steering torque signal (t) uses filtered to determine a steering torque estimate (TKF), wherein the steering torque estimate (TKF) with at least one limit value is compared, wherein by means of the comparison it is determined whether the driver in the steering arrangement (22) engages.

2. Computer implemented method of claim 1, wherein the steering torque shift is determined by a band pass filter (30).

3. Computer implemented method of claim 1 or 2, wherein the Kalman filter is an adaptive Kalman filter (32) having a covariance matrix adaptively adapted to compensate for both a static steering torque shift and a dynamic steering torque shift.

4. Computer implemented method according to any one of the preceding claims, wherein in a second branch (36) a time derivative of the steering torque signal (t) is formed, in order to determine a steering torque variation (t ̇f), wherein the steering torque variation (t ̇f) with at least one limit value is compared, wherein by means of the comparison it is determined whether the driver in the steering arrangement (22) engages.

5. Computer implemented method according to claim 4, wherein a low-pass filter (38, 42) is applied to the steering torque signal (T) and/or the time derivative (T ̇F) of the steering torque signal (T) before and/or after the time derivative of the steering torque signal (T).

6. Computer implemented method of claim 5, wherein a determination of driver intervention in the steering assembly (22) is made from the first branch (28) or the second branch (36).

7. Computer implemented method of any of the preceding claims 4 to 6, wherein the first branch (28) generates a first output signal (T28), the second branch (36) generates a second output signal (T36), wherein the first output signal (T28) and the second output signal (T36) are combined, the combined output signals (T28, T36) being used to determine whether the driver is intervening in the steering assembly (22).

8. Computer implemented method of claim 7, wherein the merged output signals (T28, T36) are debounced by means of a debouncing function (46), wherein the merged debounced output signals (T28, T36) are used to determine whether the driver is intervening in the steering assembly (22).

9. Computer programme product comprising a computer readable non-volatile storage medium (20) having embedded thereon instructions which, when executed by at least one computing unit (18), cause the at least one computing unit (18) to be adapted to perform the method of any preceding claim.

10. Driving assistance system of a motor vehicle, comprising an actuator (12), a steering torque sensor (14) and a controller (16), wherein the controller (16) comprises a processor (18) and a computer programme product according to claim 9.

11. Motor vehicle with a computer programme product according to claim 9 and/or a driving assistance system (4) according to claim 10.

## Revendications

1. Procédé mis en œuvre par ordinateur pour déterminer l'état d'engagement d'un volant de direction d'un conducteur d'un véhicule automobile (2), le véhicule automobile (2) présentant au moins une fonction de conduite s'engageant dans un ensemble de direction (22) du véhicule automobile (2), un couple de direction étant détecté sur l'ensemble de direction (22) et un signal de couple de direction (T) étant produit à partir de celui-ci. Dans une première branche (28), un décalage de couple de direction (Toff) est déterminé à partir du signal de couple de direction (T), un filtre de Kalman (32) étant utilisé comme grandeurs de mesure Le filtre de Kalman (32) filtre le décalage de couple de direction (Toff) à partir du signal de couple de direction (T) pour déterminer une estimation de couple de direction (TKF), l'estimation de couple de direction (TKF) étant comparée à au moins une valeur limite, la comparaison déterminant si le conducteur s'engage dans l'ensemble de direction (22).

2. Procédé mis en œuvre par ordinateur selon la revendication 1, dans lequel le décalage de couple de direction est déterminé au moyen d'un filtre passe-bande (30).

3. Procédé mis en œuvre par ordinateur selon la revendication 1 ou 2, dans lequel le filtre de Kalman est un filtre de Kalman adaptatif (32) ayant une matrice de covariance adaptée de manière adaptative pour compenser à la fois un décalage de couple de braquage statique et un décalage de couple de braquage dynamique.

4. Procédé mis en œuvre par ordinateur selon l'une des revendications précédentes, dans lequel dans une deuxième branche (36) est formée une dérivée temporelle du signal de couple de direction (T) pour déterminer une variation de couple de direction (T ˙F), la variation de couple de direction (T ˙F) étant comparée à au moins une valeur limite, la comparaison déterminant si le conducteur s'engage dans l'ensemble de direction (22).

5. Procédé mis en œuvre par ordinateur selon la revendication 4, dans lequel un filtre passe-bas (38, 42) est appliqué au signal de couple de braquage (T) et/ou à la dérivée temporelle (T ˙F) du signal de couple de braquage (T) avant et/ou après la dérivée temporelle du signal de couple de braquage (T).

6. Procédé mis en œuvre par ordinateur selon la revendication 5, dans lequel une détermination de l'engagement du conducteur dans l'ensemble de direction (22) est effectuée à partir de la première branche (28) ou de la seconde branche (36).

7. Procédé mis en œuvre par ordinateur selon l'une quelconque des revendications précédentes 4 à 6, dans lequel la première branche (28) génère un premier signal de sortie (T28), la deuxième branche (36) génère un deuxième signal de sortie (T36), le premier signal de sortie (T28) et le deuxième signal de sortie (T36) étant combinés, le fait que le conducteur engage ou non l'ensemble de direction (22) étant déterminé à partir des signaux de sortie combinés (T28, T36).

8. Procédé mis en œuvre par ordinateur selon la revendication 7, dans lequel les signaux de sortie combinés (T28, T36) sont rebondis au moyen d'une fonction de rebond (46), dans lequel on détermine à partir des signaux de sortie rebondis combinés (T28, T36) si le conducteur s'engage dans l'ensemble de direction (22).

9. Produit de programme informatique comprenant un support de mémoire non volatile lisible par ordinateur (20) sur lequel sont incorporées des instructions qui, lorsqu'elles sont exécutées par au moins une unité de calcul (18), font que ladite au moins une unité de calcul (18) est adaptée pour exécuter le procédé selon l'une quelconque des revendications précédentes.

10. Système d'assistance à la conduite d'un véhicule automobile, comprenant un actionneur (12), un capteur de couple de direction (14) et une commande (16), la commande (16) comprenant un processeur (18) et un produit de programme informatique selon la revendication 9.

11. Véhicule automobile comprenant un produit de programme informatique selon la revendication 9 et/ou un système d'assistance à la conduite (4) selon la revendication 10.

8

8

6

22

27

12

24

14

26

10

18

16

20

4

2

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009028647 A1
- DE 102016005013 A1
- DE 102013113628 A1

**In der Beschreibung aufgeführte Nicht-Patentliteratur**

- **S. AKHLAGHI** ; **N. ZHOU** ; **Z. HUANG**. Adaptive adjustment of noise covariance in Kalman filter for dynamic state estimation. *IEEE Power and Energy Society General Meeting (PESGM 2017), 16-20 July 2017, Chicago, IL, USA*, 16 July 2017